# EUROPEAN PATENT SPECIFICATION

(11) **EP 3 524 496 B1**
(45) Date of publication and mention of the grant of the patent: **27.01.2021**
(21) Application number: 19155532.5
(22) Date of filing: 05.02.2019
(51) Int. Cl.: B62D 25/08, B60K 5/04, B60K 1/00, B60K 5/12, B62D 27/06

(54) **VEHICLE FRONT END**
FAHRZEUGVORBAU
EXTRÉMITÉ AVANT DE VÉHICULE

(30) Priority: 09.02.2018 JP 2018021686
(43) Date of publication of application: 14.08.2019
(73) Proprietor: TOYOTA JIDOSHA KABUSHIKI KAISHA, Aichi-ken 471-8571 (JP)
(72) Inventor: DOMON, Yoshinori, TOYOTA-SHI, AICHI-KEN, 471-8571 (JP); TOMIZAWA, Yoshihito, TOYOTA-SHI, AICHI-KEN, 471-8571 (JP)
(74) Representative: Cabinet Beau de Loménie

(56) References cited:
- EP-A2- 1 400 437
- JP-A- H08 310 252
- JP-A- 2015 089 750
- US-A- 5 267 630

## Description

### CROSS REFERENCE TO RELATED APPLICATION

This application claims priority to Japanese Patent Application No. 2018-021686 filed on February 9, 2018.

### TECHNICAL FIELD

The present disclosure relates to a vehicle front end, in particular, to a vehicle front end including a fastening bracket which secures a compartment cross member to a vehicle body.

### BACKGROUND

Electric vehicles using motors as drive sources have been widely used in recent years. In those electric vehicles, with other devices such as a power control unit (PCU), a driving motor is mounted inside a front compartment of the vehicle. There is proposed a structure to mount a power unit such as a motor in a compartment in which a motor is mounted, via a mount including anti-vibration rubber, to a front cross member extending between front side members on the right and left sides, a compartment cross member, and a suspension member. The PCU and other devices are also mounted to the compartment cross member.

JP 2015 089750 A discloses a vehicle front end exhibiting the features of the preamble of claim 1.

In recent years, there are structures under examination to enable collective mounting of devices to a vehicle body by attaching a motor, a PCU, a charger, and other devices on a compartment cross member and then mounting, to a vehicle body, the compartment cross member to which these devices have been already attached. In such a structure, because the total weight of these devices is placed on the compartment cross member, a strong fastening force between the compartment cross member and the body is necessary. Thus, a fastening bracket connecting the compartment cross member and a wheel housing apron portion becomes necessary.

However, when the compartment cross member is connected with the apron portion made of sheet metal, vibration from a motor or gear mounted to the compartment cross member propagates inside a passenger compartment from the apron portion via the fastening bracket. This may result in louder noise inside the passenger compartment. Although it is possible to avoid such noise by mounting a motor or other devices to the compartment cross member via a rubber mount, the structure becomes complicated.

An object of the present disclosure is to reduce noise inside a passenger compartment with a simple structure.

### SUMMARY

A vehicle front end according to an exemplary embodiment of the present disclosure includes front side members extending along a vehicle longitudinal axis on the right and left sides of a vehicle at the vehicle front end, and a compartment cross member disposed between the right and left front side members. A power unit is attached to the compartment cross member. The vehicle front end also includes apron portions of wheel housings disposed on the right and left sides of the vehicle and above the front side members. Each of the apron portions is positioned nearer to the front of the vehicle than a front suspension tower. The vehicle front end further includes fastening brackets disposed on the right and left sides of the vehicle for fastening the compartment cross member, the front side members, and the apron portions. Each of the fastening brackets includes a base which fastens the compartment cross member and the front side member, and an arm which extends upward from the base to the apron portion and is fastened to the apron portion. The arm includes a groove-shaped bent portion extending along the vehicle longitudinal axis.

Deformation of the groove-shaped bent portion of the arm absorbs vibration which would cause noise if transmitted to the apron portions from the compartment cross member to inhibit transmission of such noise.

In a vehicle front end according to an exemplary embodiment of the present disclosure, the bent portion may have a groove shape of a trapezoid cross section, a semicircular cross section, or a V-shaped cross section.

Noise inside a passenger compartment can be reduced with a simple structure because vibrations can be absorbed with the bent portion of a simple structure.

According to the present disclosure, noise inside the passenger compartment can be reduced with a simple structure.

### BRIEF DESCRIPTION OF DRAWINGS

Embodiment(s) of the present disclosure will be described by reference to the following figures, wherein:
FIG. 1 is a perspective view of a vehicle front end according to an embodiment of the present disclosure;
FIG. 2 is a cross sectional view of a vehicle front end according to an embodiment of the present disclosure;
FIG. 3 is an exploded perspective view of a power unit;
FIG. 4 is a perspective view of a fastening bracket; and
FIG. 5 is a cross sectional view showing deformation of a fastening bracket caused by vibration from a transmission to a compartment cross member to which a power unit is attached.

### DESCRIPTION OF EMBODIMENTS

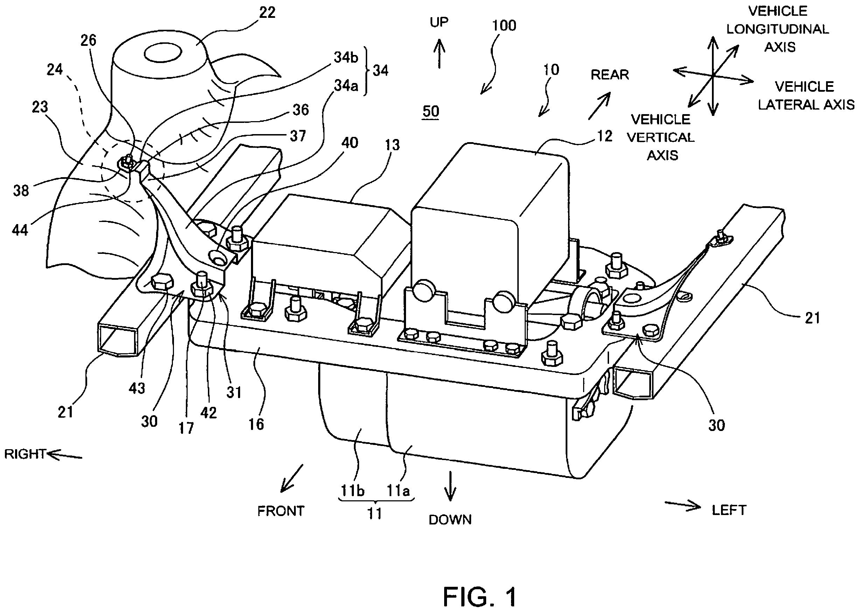

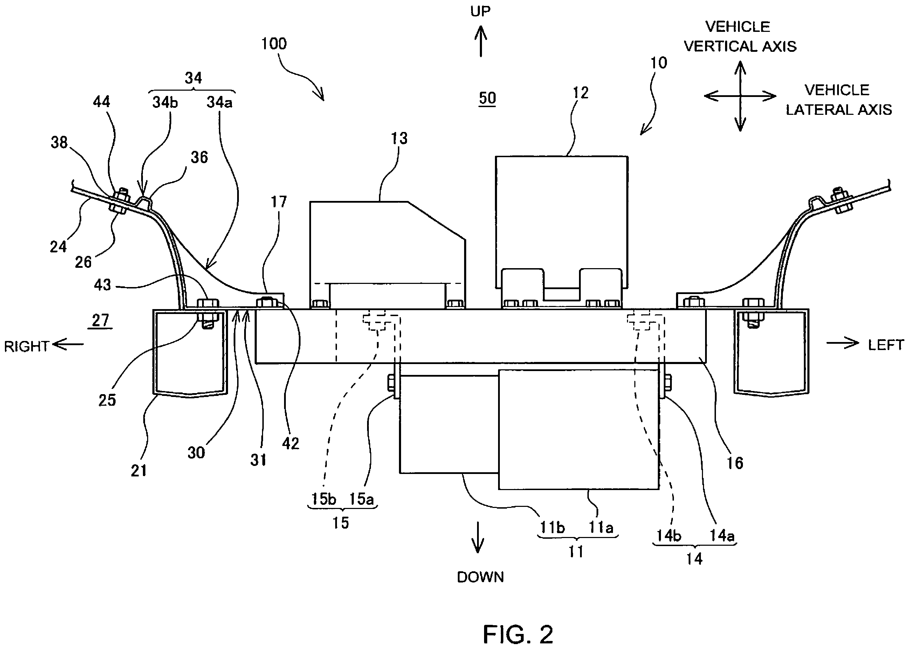

A vehicle front end 100 according to an exemplary embodiment of the present disclosure is described below by referring to the attached drawings. As shown in FIGs. 1 and 2, the vehicle front end 100 includes front side members 21 mounted inside a front compartment 50, a compartment cross member 16, apron portions 24, and fastening brackets 30. The right and left directions indicated in the drawings correspond to the right and left when viewed from the rear of the vehicle.

As shown in FIG. 1, the front side members 21 are reinforcing members disposed on both sides of the vehicle inside the front compartment 50 and extending along the vehicle longitudinal axis. Each front side member 21 has a rectangular closed cross section. As shown in FIG. 2, a nut 25 mating with a bolt 43 for fastening the fastening bracket 30 is welded inside the front side member 21.

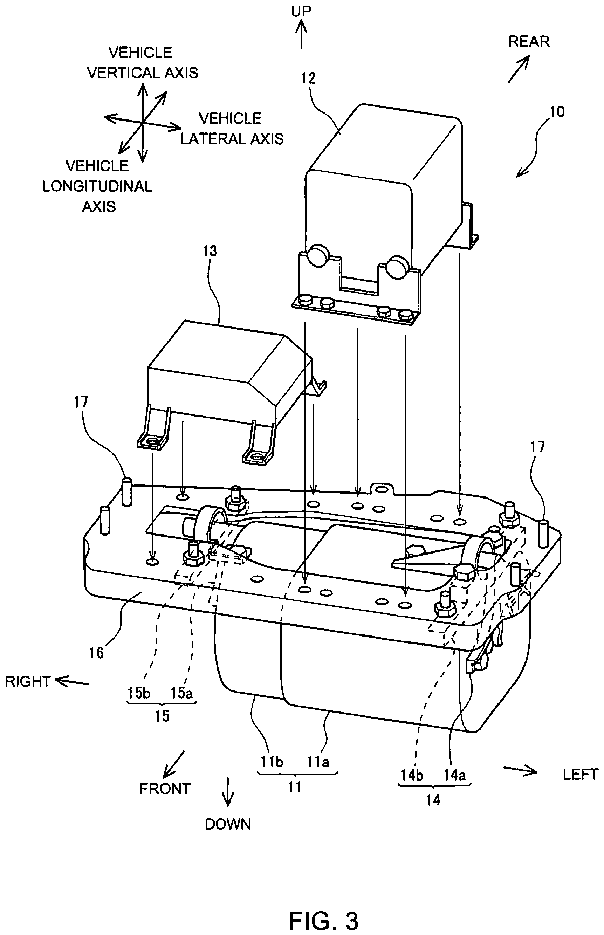

As shown in FIG. 3, the compartment cross member 16 is a base member which has a flat open box shape with a vertically penetrating opening at a middle. A power unit 10 including a motor unit 11, a power control unit (PCU) 12, and a charger 13 is attached to the compartment cross member 16. The motor unit 11 is a combination of a motor 11a and a transmission 11b. The motor unit 11 is attached below the compartment cross member 16 by bolting motor-side fastening portions 14a, 15a of right and left motor mounts 14, 15 to the motor 11a and member-side fastening portions 14b, 15b to the compartment cross member 16. The PCU 12 and the charger 13 are bolted on the upper surface of the compartment cross member 16. A pair of bolts 17 for fastening the fastening bracket 30 are provided near both of the right and left ends of the compartment cross member 16. The bolt heads of the bolts 17 are welded on the lower surface of the compartment cross member 16 and the threaded portions protrude from the upper surface of the compartment cross member 16.

As shown in FIGs. 1 and 2, each apron portion 24 of a wheel housing 23 is positioned above the front side member 21 and nearer to the front of the vehicle than a front suspension tower 22. The apron portion 24 is made of sheet metal. As shown in FIG. 2, a bolt 26 for fastening the fastening bracket 30 is attached inside each of the apron portion 24. The bolt head of each bolt 26 is welded on the apron portion 24 on a wheel housing space 27 side. The threaded portion protrudes from the apron portion 24 on the front compartment 50 side.

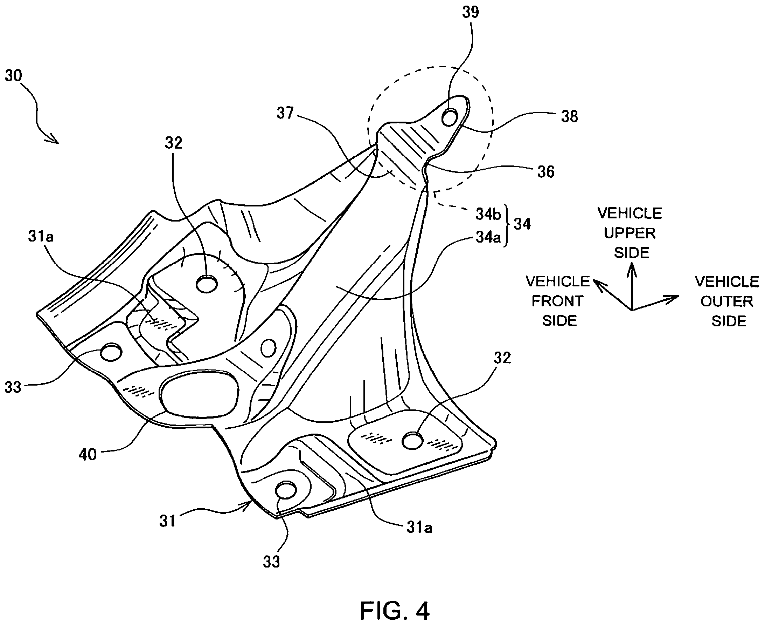

As shown in FIG. 4, the fastening bracket 30 includes a base 31 and an arm 34. The base 31 has a flat plate on a surface of which one or more reinforcing ribs 31a are formed. The base 31 includes holes 32 on a laterally outer side to pass the bolts 43 for fastening the front side member 21. The base 31 also includes holes 33 on a laterally inner side to pass the threaded portions of the bolts 17 secured to the compartment cross member 16. A weight-reduction hole 40 is provided in the base at the center on the laterally inner side.

The arm 34 has a groove-shape cross section which protrudes inward of the vehicle. The arm 34 includes a proximal portion 34a extending upwards from the base 31 and a plate-shaped distal portion 34b extending upwards from the proximal portion 34a to the apron portion 24. A groove-shaped bent portion 36 extending along the vehicle longitudinal axis is formed at the distal portion 34b of the arm 34. The bent portion 36 may be formed by bending a flat plate to have a trapezoid cross section. The tip side of the bent portion 36 continues to a joint portion 38 having a flat plate shape. The joint portion 38 includes a hole 39 for passing a threaded portion of the bolt 26 secured to the apron portion 24.

The compartment cross member 16 to which the power unit 10 has already been attached is mounted inside the front compartment 50 as described below. First, as shown in FIG. 2, the fastening bracket 30 is positioned so that the hole 39 (FIG. 4) of the distal portion 34b of the fastening bracket 30 passes the bolt 26 secured to the apron portion 24, and the holes 32 (FIG. 4) on the laterally outer side of the base 31 of the fastening bracket 30 are aligned with the nuts 25 secured to the front side member 21. Then, as shown in FIGs. 1 and 2, a nut 44 is tightened on the bolt 26 to secure the distal portion 34b of the fastening bracket 30 to the apron portion 24. The bolts 43 are inserted into the holes 33 of the fastening bracket 30 on the laterally inner side and tightened on the nuts 25 secured inside the front side member 21 to secure the fastening bracket 30 to the front side member 21.

As shown in FIGs. 1 and 2, the compartment cross member 16 to which the power unit 10 is attached as shown in FIG. 3 is positioned between the right and left front side members 21. The bolts 17 secured to the compartment cross member 16 are aligned with the holes 33 on the laterally inner side of the fastening bracket 30 secured to the front side member 21. Then, the compartment cross member 16 is lifted so that the bolts 17 are inserted into the holes 33 of the fastening bracket 30 and nuts 42 are tightened on the bolts 17 from the upper side to secure the fastening bracket 30 to the compartment cross member 16.

As described above, the compartment cross member 16 to which the power unit 10 has already been attached is mounted inside the front compartment 50 by fastening, with the fastening brackets 30, the compartment cross member 16 with the power unit 10 attached, the front side members 21, and the apron portions 24.

The bases 31 of the fastening brackets 30 are fastened to the compartment cross member 16 and the front side members 21 to transmit to the front side members 21 a load of the compartment cross member 16 to which the power unit 10 is attached. The arms 34 are secured to the apron portions 24 to reduce vertical vibration of the power unit 10 caused by driving.

When the motor unit 11 is driven, the transmission 11b causes vibration of higher frequency than the vertical vibration caused by driving. When such vibration from the transmission 11b causes small vertical vibration of the compartment cross member 16, the vibration transmits inside the passenger compartment from the arms 34 via the apron portions 24 made of sheet metal. Such vibration may be recognized as gear noise.

Each fastening bracket 30 according to the above embodiment of the present disclosure includes, at the distal portion 34b of the arm 34, the bent portion 36 which may be formed to have a groove shape of a trapezoid cross section by bending a flat plate. High frequency vibration from the transmission 11b can be absorbed by deformation of the bent portion 36 to reduce vibration transmitted to the apron portion 24.

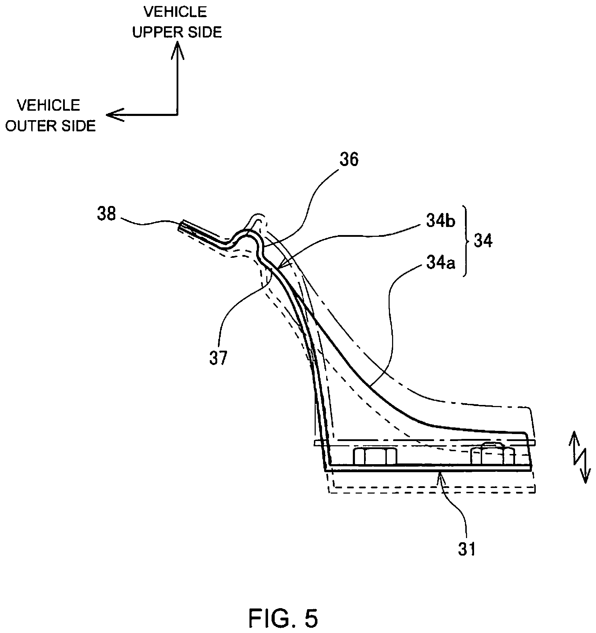

As shown in FIG. 5, when high frequency vertical vibration due to the transmission 11b occurs at the compartment cross member 16 to which the power unit 10 is attached, the base 31 of each fastening bracket 30 vertically vibrates with vertical vibration of the compartment cross member 16. As shown by dash-dot lines in FIG. 5, when the base 31 displaces upwards, the bent portion 36 is deformed to be compressed between the joint portion 38 secured to the apron portion 24 and a lower portion 37 of the distal portion 34b. In contrast, as shown by broken lines in FIG. 5, when the base 31 displaces downwards, the bent portion 36 is deformed to be pulled between the joint portion 38 and the lower portion 37 of the distal portion 34b. Such deformation of the bent portion 36 absorbs high frequency vibration from the transmission 11b to reduce vibration transmitted to the apron portion 24. This can reduce gear noise inside the passenger compartment. While the vertical swing distance is exaggerated in FIG. 5 for convenience of description, the actual vertical swing distance of the compartment cross member 16 due to the vibration of the transmission 11b is significantly small.

The bend depth and the bend width of the bent portion 36 are determined so that while high frequency vibration due to the transmission 11b is absorbed, vibration of a lower frequency is transmitted to the apron portion 24 to reduce vibration. In this way, the fastening bracket 30 can reduce vertical vibration of the compartment cross member 16 caused by driving by transmitting, to the apron portion 24, a vertical drive vibration load of the compartment cross member 16 to which the power unit 10 is attached.

Although the bent portion 36 is described to be formed by bending a flat plate to have a groove shape of a trapezoid cross section in the vehicle front end 100 according to the above embodiment, the bent portion 36 is not limited to this example. The bent portion 36 may be formed to have a semicircular or V-shaped cross section by bending. In such cases, the radius of the semicircle or the depth of the V-shaped groove may be determined so that while high frequency vibration due to the transmission 11b is absorbed, vibration of a lower frequency is transmitted to the apron portion 24 to reduce vibration.

As described above, the vehicle front end 100 according to the embodiment of the present disclosure can reduce noise in the passenger compartment with a simple structure by providing the groove-shaped bent portion 36 extending along the longitudinal axis of the vehicle at the arm 34 of each fastening bracket 30 which connects the compartment cross member 16, the front side member 21, and the apron portion 24. The arm 34 is attached to the apron portion 24.

## Claims

1. A vehicle front end (100) comprising:
front side members (21) extending along a vehicle longitudinal axis on the right and left sides of a vehicle at the vehicle front end;
a compartment cross member (16) disposed between the right and left front side members (21), a power unit (10) being attached to the compartment cross member (16);
apron portions (24) of wheel housings (23) disposed on the right and left sides of the vehicle and above the front side members (21), each of the apron portions (24) being positioned nearer to the front of the vehicle than a front suspension tower (22);
**characterized by** further comprising:
fastening brackets (30) disposed on the right and left sides of the vehicle for fastening the compartment cross member (16), the front side members (21), and the apron portions (24),
wherein each of the fastening brackets (30) comprises
a base (31) fastening the compartment cross member (16) and the front side member (21), and
an arm (34) upwardly extending from the base (31) to the apron portion (24) and fastened to the apron portion (24), and
the arm (34) comprises a groove-shaped bent portion (36) extending along the vehicle longitudinal axis.

2. The vehicle front end according to claim 1, wherein
the bent portion (36) has a groove shape of a trapezoid cross section, a semicircular cross section, or a V-shaped cross section.

## Patentansprüche

1. Fahrzeugfront (100), umfassend:
Frontseitenelemente (21), die sich auf der rechten und auf der linken Seite eines Fahrzeugs an der Fahrzeugfront entlang einer Längsachse des Fahrzeugs erstrecken,
einen Kammerquerträger (16), der zwischen dem rechten und dem linken Frontseitenelement (21) angeordnet ist, wobei eine Antriebseinheit (10) an dem Kammerquerträger (16) angebracht ist,
Schürzenteile (24) von Radläufen (23), die auf der rechten und auf der linken Seite des Fahrzeugs und über den Frontseitenelementen (21) angeordnet sind, wobei jedes der Schürzenteile (24) näher an der Vorderseite des Fahrzeugs positioniert ist als ein vorderer Aufhängungsturm (22),
**dadurch gekennzeichnet, dass** sie ferner umfasst:
Befestigungswinkel (30), die auf der rechten und auf der linken Seite des Fahrzeugs zum Befestigen des Kammerquerträgers (16), der Frontseitenelemente (21) und der Schürzenteile (24) angeordnet sind,
wobei jeder Befestigungswinkel (30)
eine Basis (31), die den Kammerquerträger (16) und das Frontseitenelement (21) befestigt, und
einen Arm (34), der sich von der Basis (31) nach oben hin zu dem Schürzenteil (24) erstreckt und an dem Schürzenteil (24) befestigt ist, umfasst und
der Arm (34) einen nutförmigen gebogenen Abschnitt (36) umfasst, der sich entlang der Längsachse des Fahrzeugs erstreckt.

2. Fahrzeugfront nach Anspruch 1, wobei
der gebogene Abschnitt (36) eine Nutform mit einem trapezförmigen Querschnitt, einem halbkreisförmigen Querschnitt oder einem V-förmigen Querschnitt aufweist.

## Revendications

1. Extrémité avant de véhicule (100) comprenant :
des éléments latéraux avant (21) s'étendant le long d'un axe longitudinal de véhicule sur les côtés droit et gauche d'un véhicule au niveau de l'extrémité avant de véhicule ;
une traverse de compartiment (16) disposée entre les éléments latéraux avant droit et gauche (21), une unité de propulsion (10) étant fixée sur la traverse de compartiment (16) ;
des parties de tablier (24) de logements de roue (23) disposées sur les côtés droit et gauche du véhicule et au-dessus des éléments latéraux avant (21), chacune des parties de tablier (24) étant positionnée plus près de l'avant du véhicule qu'une tourelle de suspension avant (22) ;
**caractérisée en ce qu'**elle comprend en outre :
des supports de fixation (30) disposés sur les côtés droit et gauche du véhicule pour fixer la traverse de compartiment (16), les éléments latéraux avant (21), et les parties de tablier (24),
chacun des supports de fixation (30) comprenant une base (31) qui fixe la traverse de compartiment (16) et l'élément latéral avant (21), et
un bras (34) qui s'étend vers le haut depuis la base (31) jusqu'à la partie de tablier (24) et fixé sur la partie de tablier (24), et
le bras (34) comprenant une partie coudée en forme de rainure (36) s'étendant le long de l'axe longitudinal de véhicule.

2. Extrémité avant de véhicule selon la revendication 1, dans laquelle
la partie coudée (36) a une forme de rainure de section trapézoïdale, de section semi-circulaire, ou de section en forme de V.
